# EUROPÄISCHE PATENTSCHRIFT

(11) **EP 1 382 010 B1**
(45) Veröffentlichungstag und Bekanntmachung des Hinweises auf die Patenterteilung: **17.11.2004**
(21) Anmeldenummer: 02718185.8
(22) Anmeldetag: 08.03.2002
(51) Int. Cl.: G06K 19/077

(54) **VERFAHREN ZUM VERBINDEN VON MIKROCHIPS MIT AUF EINEM TRÄGERBAND ANGEORDNETEN ANTENNEN ZUM HERSTELLEN EINES TRANSPONDERS**
METHOD FOR CONNECTING MICROCHIPS TO AN ANTENNA ARRANGED ON A SUPPORT STRIP FOR PRODUCING A TRANSPONDER
PROCEDE POUR ASSEMBLER DES MICROPUCES AVEC DES ANTENNES DISPOSEES SUR UNE BANDE SUPPORT POUR OBTENIR UN TRANSPONDEUR

(30) Priorität: 25.04.2001 DE 10120269
(43) Veröffentlichungstag der Anmeldung: 21.01.2004
(73) Patentinhaber: Mühlbauer AG, 93426 Roding (DE)
(72) Erfinder: BROD, Volker, 93077 Bad Abbach (DE); OVERMEYER, Ludger, 31535 Bordenau (DE)
(74) Vertreter: Aufenanger, Martin
(86) Internationale Anmeldenummer: PCT/EP2002/002577
(87) Internationale Veröffentlichungsnummer: WO 2002/089051

(56) Entgegenhaltungen:
- EP-A- 0 952 543
- DE-A- 19 912 201
- FR-A- 2 795 203
- US-A- 5 470 411

## Beschreibung

Die Erfindung bezieht sich auf ein Verfahren zum Verbinden von Mikrochips mit auf einem ersten Trägerband angeordneten Antennen zum Herstellen eines. Transponders.

Derartige Transponder, die z.B. für sog. smart-labels oder smart-cards verwendet werden, weisen eine flächige Antennenspule auf, die mit zwei Anschlüssen versehen ist. Die Antennen können aus verschiedenen Materialien hergestellt sein, wie z.B. Kupfer, Aluminium, Silberleitpaste oder dgl. Die Größe der Antennen kann je nach Anwendung unterschiedlich sein. Bei den derzeitigen Herstellungsverfahren sind die flächigen Antennenspulen auf einem Trägerband aufgebracht, welches auf eine Rolle aufgewickelt angeliefert wird. Bislang werden die Mikrochips durch einen aufwendigen Bond-Prozess mit den Antennen auf dem Trägerband verbunden. Hierzu ist es erforderlich, daß das die Antennen aufweisende Trägerband über einen Indexer läuft und während des Bond-Prozesses stillsteht. Abgesehen davon, daß der Bond-Prozess aufwendige Maschinen und ausgesprochen präzises Arbeiten erfordert, benötigt der Bond-Vorgang derzeit bis zu 15 Sekunden. Dieser verhältnismäßig hohe Zeitaufwand steht einer wirtschaftlichen Herstellung der Transponder entgegen. Ein Verfahren zum Herstellen von Transpondem ist beispielsweise in der DE-A 199 15 765 beschrieben, bei dem Halbleiterchips und Antenne auf die Flächenseite einer thermoplastischen Folie aufgebracht werden, wobei die Folie zu einem endlosen Folienband verbunden ist. Aus der DE-A 199 16 781 ist ferner bekannt, einzelne Chips auf Laminatbögen aufzubringen.

US-A-5 470 411 beschreibt ein Herstellungsver fahren bei dem sich die Chips und die zugehörigen Antennen auf jeweils einem eigenen Band befinden. Die Chips werden jedoch nicht von einem Band abgenommen um auf das andere Band aufgesetzt zu werden.

Aufgabe der vorliegenden Erfindung ist es, ein Verfahren der eingangs genannten Art weiter zu entwickeln, das es erlaubt, Transponder einfacher, schneller und vor allen Dingen wirtschaftlicher herzustellen.
Diese Aufgabe wird erfindungsgemäß dadurch gelöst, daß die Mikrochips in einem vorgeschalteten Bond-Prozess in einem Chipmodul mit elektrischen Anschlüssen verpackt und auf ein zweites Trägerband aufgebracht werden, daß die beiden Trägerbänder von der Rolle abgewickelt und übereinander gebracht werden, wobei die Chipmodule von dem zweiten Trägerband abgenommen und auf eine vorbestimmte Stelle des ersten Trägerbands aufgesetzt werden, wobei ferner zumindest im Zeitpunkt des Aufsetzens des Chipmoduls die Bandgeschwindigkeit des zweiten Trägerbandes an die Bandgeschwindigkeit des ersten Trägerbandes angepaßt ist.

Das Verlagern des Bond-Prozesses in einen vorgeschalteten Prozess hat den Vorteil, daß das auf diese Art und Weise erzeugte Chipmodul wesentlich schneller und einfacher auf das mit den Antennen versehene erste Trägerband aufgebracht werden kann. Es ist möglich, das Chipmodul mit der Antenne zu verlöten oder zu crimpen, was zum einen wesentlich schneller geht und zum anderen weniger Präzision als ein Bond-Prozess erfordert. Die Herstellungsgeschwindigkeit wird bei dem erfindungsgemäßen Verfahren weiter dadurch erhöht, daß beide Trägerbänder von der Rolle abgewickelt und übereinander gebracht werden und zum Zeitpunkt des Aufsetzens des Chipmoduls auf das erste Trägerband die Geschwindigkeiten beider Trägerbänder angepaßt sind. Deshalb ist es nicht erforderlich, daß beim Verbinden des Chipmoduls mit einer Antenne die Trägerbänder stillstehen. Der Prozess kann somit kontinuierlich durchlaufen, was eine erhebliche Erhöhung der Herstellungsgeschwindigkeit zur Folge hat. Dabei ist es auch nicht so, daß der vorgeschaltete Bond-Prozess an einer anderen Stelle zu einer Verlangsamung des Herstellungsverfahrens insgesamt führt. Es ist vielmehr so, daß das Verpacken des Mikrochips in ein Chipmodul im Rahmen eines vorgeschalteten Bond-Prozesses wesentlich einfacher zu bewerkstelligen ist als das Banden eines Mikrochips auf eine Antenne. Ferner kann das Verpacken des Mikrochips in ein Chipmodul an einer zentralen Stelle, nämlich beispielsweise bei dem Mikrochiphersteller erfolgen, so daß bei dem Hersteller des Transponders die Anschaffung eines teuren Bonders, der dazu hochqualifiziertes Bedienungspersonal erfordert, entfällt.

Gemäß einer bevorzugten Ausführungsform läuft das erste, die Antennen tragende Trägerband mit einer kontinuierlichen Geschwindigkeit, während das zweite Trägerband im Takt der vorbeilaufenden Antennenabstände über einen Indexsatz läuft, das im ersten Trägerband geführt wird. Dabei wird das zweite Trägerband zum Aufsetzen des Chipmoduls auf das erste Trägerband kurzfristig auf die Bandgeschwindigkeit des ersten Trägerbandes beschleunigt. Das auf diese Weise an der richtigen Stelle plazierte Chipmodul kann unmittelbar nach dem Aufsetzen auf das erste Trägerband mit der zugehörigen Antenne durch Löten oder Crimpen elektrisch verbunden werden. Unmittelbar nach dem Verbinden des Chipmoduls kann der auf diese Weise hergestellte Transponder mit üblichen Verfahren getestet werden.

Besonders bevorzugt wird, wenn das Chipmodul beim Aufsetzen auf das erste Trägerband von einem mit gleicher Geschwindigkeit wie das erste Trägerband endlos umlaufenden Transportband an dem ersten Trägerband gehalten wird, bis das Chipmodul fest mit der zugehörigen Antenne verbunden ist. Das Transportband übernimmt sozusagen das von dem zweiten Trägerband abgegebene Chipmodul und sorgt dafür, daß das Chipmodul während des Weiterlaufens des ersten Trägerbandes an der richtigen Position zu der Antenne gehalten wird.

Von Vorteil ist, wenn das Anlöten des Chipmoduls an die Antenne mittels eines Laserstrahls erfolgt.

Die auf diese Weise hergestellten Transponder können nach Fertigstellung und eventuellen Testvorgang mit dem ersten Trägerband wieder aufgerollt werden.

Im folgenden wird die Erfindung beispielhaft anhand einer Zeichnung näher erläutert. Es zeigen:
- Fig. 1: ein erstes, antennentragendes Trägerband,
- Fig. 2: ein zweites, mit Chipmodulen bestücktes Trägerband,
- Fig. 3: das erste Trägerband aus Fig. 1 mit aufgesetzten und an die Antennenanschlüsse angeschlossenen Chipmodulen,
- Fig. 4: in einer schematischen Darstellung eine Vorrichtung zum Verbinden der Chipmodule des zweiten Trägerbandes mit den Antennen des ersten Trägerbandes.

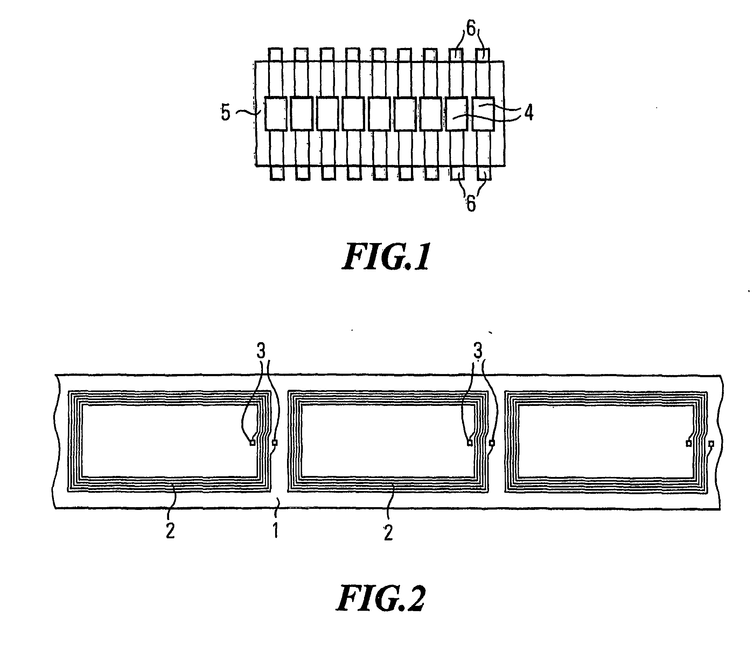

Fig. 1 zeigt ein erstes Trägerband 1, auf dem Spulen 2 als Antennen aufgebracht sind. Es handelt sich hierbei um durch galvanisches Abscheiden hergestellte Antennen. Die Spulen 2 weisen zwei Anschlüsse 3 für ein Chipmodul auf.

Derartige Chipmodule 4 sind in Fig. 2 dargestellt. Sie sind dicht hintereinander auf einem zweiten Trägerband 5 gehalten. Die Chipmodule sind durch einen vorgeschalteten Bond-Prozess in ein in Fig. 2 gezeigtes Chipgehäuse verpackt. Dieses Gehäuse weist zwei bereits verzinkte Anschlußflächen 6 auf, deren Abstand mit den Anschlüssen der Rechteckspulen 2 korrespondiert.

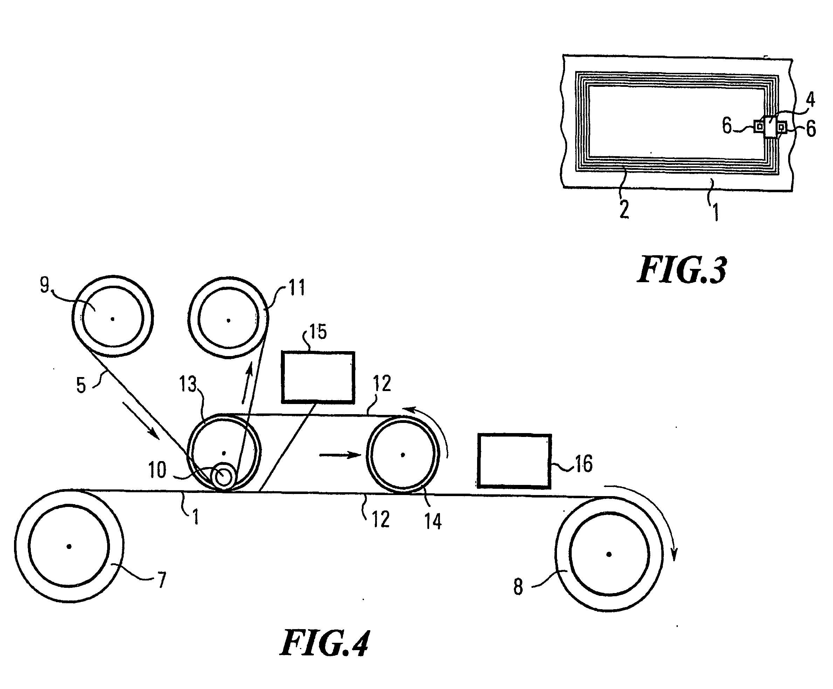

Fig. 3 zeigt ein Trägerband 1 mit einer Rechteckspule 2, die bereits mit einem Chipmodul 4 komplettiert wurde. Das Chipmodul 4 wurde mit seinen Anschlußflächen 6 an die Anschlüsse 3 angelötet.

Im folgenden wird das Herstellungsverfahren anhand der Fig. 4 näher erläutert.

Das erste Trägerband 1 ist auf einer Eingangsspule 7 aufgerollt und wird von dieser abgespult und nach dem Verbindungsprozeß auf einer Fertigspule 8 aufgewickelt.

Das zweite Trägerband 5, welches dieChipmodule 4 trägt, wird von einer Spule 9 für Chipmodule abgewickelt, an einer Umlenkrolle 10 umgelenkt und an einer Restbandspule 11 wieder aufgewickelt.

Auf Höhe der Umlenkrolle 10 beginnt ein umlaufendes Transportband 12, genaugenommen die erste Umlenkrolle 13 des Transportbandes 12. Das Transportband 12 erstreckt sich oberhalb des ersten Trägerbandes 1 bis zu einer Antriebsrolle 14. Zwischen der Umlenkrolle 13 und der Antriebsrolle 14 ist eine Laserlöteinheit 15 vorgesehen. Hinter der Antriebsrolle 14 ist ein Testchipmodul 16 vorgesehen. Die Funktionsweise der Vorrichtung ist wie folgt:

Das erste Trägerband 1 wird mit kontinuierlicher Geschwindigkeit von der Eingangsspule 7 abgezogen und auf die Fertigspule 8 aufgewickelt. Das die Chipmodule 4 tragende zweite Trägerband 5 wird von der Spule 9 im Takt der Antennenabstände auf dem ersten Trägerband 1 geindext abgezogen und um die Umlenkrolle 10 herumgeführt. An der Umlenkrolle 10 erfolgt das Ablösen der Chipmodule 4, beispielsweise durch Erwärmen des Trägerbandes 5. Beim Ablösen des Chipmoduls 4 wird dieses zugleich von dem ersten Trägerband 1 und dem mit der gleichen Geschwindigkeit wie das erste Trägerband 1 umlaufende Transportband 12 erfaßt. Das Chipmodul wird dabei mit seinen Anschlußflächen 6 genau an den Anschlüssen 3 der Rechteckspule 2 aufgesetzt. Das Transportband 12 fixiert das Chipmodul 4 an dieser Position, während es sich mit der gleichen Geschwindigkeit wie das erste Trägerband 1 kontinuierlich fortbewegt Währenddessen werden die Anschlußflächen 6 mit den Anschlüssen 3 mithilfe der Laserlöteinheit 15 verlötet, wobei der Laserstrahl sich mit der Bandgeschwindigkeit des Trägerbandes 1 mitbewegt. Die so komplettierten Transponder werden mithilfe des hinter dem Transportband 12 angeordneten Testchipmoduls 16 getestet, wonach dann das erste Trägerband auf die Fertigspule aufgewickelt wird. Auf der Fertigspule befinden sich somit komplettierte und bereits getestete Transponder. Bei den hier verwendeten Chipmodulen handelt es sich um RFID (Radio Frequency Identification)-Chipmodule. Das sind besonders flachbauende Chipmodule, die sich zusammen mit den Flachspulantennen insbesondere für smart-label-Anwendungen eignen. Smart-labels sind Etiketten, die die soeben beschriebenen Transponder beinhalten und die auf beliebige Produkte oder Bauteile aufgeklebt werden können und zu deren Kennzeichnung dienen.

Anstelle des Laserverlötens ist es auch möglich, daß die Anschlußflächen 6 der Chipmodule 4 mit den Anschlüssen 3 der Rechteckspulen 2 vercrimpt werden können.

## Patentansprüche

1. Verfahren zum Verbinden von Mikrochips mit auf einem ersten Trägerband angeordneten Antennen zum Herstellen eines Transponders, **dadurch gekennzeichnet, daß** die Mikrochips in einem vorgeschalteten Bond-Prozess zu einem Chipmodul (4) mit elektrischen Anschlüssen (6) verpackt und auf ein zweites Trägerband (5) aufgebracht werden, daß die beiden Trägerbänder (1, 5) von einer Rolle (7, 9) abgewickelt und übereinander gebracht werden, wobei die Chipmodule (4) von dem zweiten Trägerband (5) abgenommen, auf eine vorbestimmte Stelle des ersten Trägerbandes (1) aufgesetzt und jeweils mit einer Antenne elektrisch verbunden werden.

2. Verfahren nach Anspruch 1, **dadurch gekennzeichnet, daß** das erste Trägerband (1) mit einer kontinuierlichen Geschwindigkeit läuft, während das zweite Trägerband (5) im Takt der vorbeilaufenden Antennenabstände über einen Indexer zum ersten Trägerband (1) geführt wird.

3. Verfahren nach Anspruch 1 oder 2, **dadurch gekennzeichnet, daß** das Chipmodul (4) unmittelbar nach dem Aufsetzen auf das erste Trägerband (1) mit der zugehörigen Antenne (2) durch Löten oder Crimpen elektrisch verbunden wird.

4. Verfahren nach einem der Ansprüche 1 bis 3, **dadurch gekennzeichnet, daß** der Transponder unmittelbar nach dem Verbinden des Chipmoduls (4) mit der Antenne (2) getestet wird.

5. Verfahren nach einem der Ansprüche 1 bis 4, **dadurch gekennzeichnet, daß** das Chipmodul (4) beim Aufsetzen auf das erste Trägerband (1) von einem mit gleicher Geschwindigkeit wie das erste Trägerband (1) endlos umlaufenden Transportband (12) an dem ersten Trägerband (1) gehalten wird, bis das Chipmodul (4) fest mit der zugehörigen Antenne (2) verbunden ist

6. Verfahren nach einem der Ansprüche 1 bis 5, **dadurch gekennzeichnet, daß** das elektrische Verbinden des Chipmoduls (4) mit der Antenne (2) durch Laserlöten erfolgt.

## Claims

1. Method of connecting micro-chips to antennas arranged on a first carrier tape for the manufacture of a transponder, **characterised in that** the micro-chips are packaged in a preceding bonding process to form a chip module (4) with electrical terminals (6) and are applied to a second carrier tape (5) and that the two carrier tapes (1, 5) are unwound from a reel (7, 9) and brought one above the other, whereby the chip modules (4) are removed from the second carrier tape (5), placed at a predetermined point on the first carrier tape (1) and are each electrically connected to an antenna.

2. Method according to Claim 1, **characterised in that** the first carrier tape (1) runs at a continuous speed while the second carrier tape (5) is fed to the first carrier tape (1) in synchronism with the passing antenna spaces via an indexer.

3. Method according to Claim 1 or 2, **characterised in that** the chip module (4) is electrically connected to the appropriate antenna (2) by soldering or crimping immediately after placement on the first carrier tape (1).

4. Method according to one of the Claims 1 to 3, **characterised in that** the transponder is tested immediately after the connection of the chip module (4) to the antenna (2).

5. Method according to one of the Claims 1 to 4, **characterised in that** the chip module (4) is held by a transport tape (12), circulating endlessly at the same speed as the first carrier tape (1), on the first carrier tape (1) during the placement onto the first carrier tape (1) until the chip module (4) is firmly connected to the appropriate antenna (2).

6. Method according to one of the Claims 1 to 5, **characterised in that** the electrical connection of the chip module (4) to the antenna (2) occurs by laser soldering.

## Revendications

1. Procédé pour assembler des micro-puces électroniques à des antennes disposées sur une première bande porteuse pour fabriquer un transpondeur, **caractérisé en ce que** les puces électroniques sont encapsulées dans un processus amont de bonding, pour former un module de puce électronique (4) avec des connexions électriques (6) et montées sur une seconde bande porteuse (5), **en ce que** les deux bandes porteuses (1, 5) sont déroulées d'un rouleau (7, 9) et disposées l'une sur l'autre, les modules de puce électronique (4) étant prélevés de la seconde bande porteuse (5), posés à un endroit défini de la première bande porteuse (1) et reliés chacun de façon électrique à une antenne.

2. Procédé selon la revendication 1, **caractérisé en ce que** la première bande porteuse (1) passe à une vitesse continue pendant que la seconde bande porteuse (5) est conduite au rythme des antennes placées à intervalles et passant devant cette bande par delà un indexeur vers la première bande porteuse (1).

3. Procédé selon la revendication 1 ou 2, **caractérisé en ce que** le module de puce électronique (4) est relié électriquement à l'antenne correspondante (2) immédiatement après l'application sur la première bande porteuse (1), par brasage ou sertissage.

4. Procédé selon l'une quelconque des revendications 1 à 3, **caractérisé en ce que** le transpondeur est testé immédiatement après liaison du module de puce électronique (4) à l'antenne (2).

5. Procédé selon l'une quelconque des revendications 1 à 4, **caractérisé en ce que** le module de puce électronique (4) est maintenu sur la première bande porteuse (1) lors de la pose sur la première bande porteuse (1) par une bande de transport (12) en boucle avec la même vitesse que la première bande porteuse (1) jusqu'à ce que le module de puce électronique (4) soit relié de façon fixe à l'antenne correspondante (2).

6. Procédé selon l'une quelconque des revendications 1 à 5, **caractérisé en ce que** la liaison électrique du module de puce électronique (4) à l'antenne (2) s'effectue par brasage au laser.
